# EUROPÄISCHE PATENTSCHRIFT

(11) **EP 1 194 844 B1**
(45) Veröffentlichungstag und Bekanntmachung des Hinweises auf die Patenterteilung: **03.12.2003**
(21) Anmeldenummer: 00942013.4
(22) Anmeldetag: 05.06.2000
(51) Int. Cl.: G06F 9/445

(54) **CHIPKARTE MIT MEHREREN ANWENDUNGSPROGRAMMEN**
CHIP CARD WITH SEVERAL APPLICATION PROGRAMS
CARTE A PUCE COMPORTANT PLUSIEURS PROGRAMMES D'APPLICATION

(30) Priorität: 08.06.1999 DE 19926081
(43) Veröffentlichungstag der Anmeldung: 10.04.2002
(73) Patentinhaber: Giesecke & Devrient GmbH, 81677 München (DE)
(72) Erfinder: FREY, Thomas, 85560 Ebersberg (DE)
(74) Vertreter: Klunker . Schmitt-Nilson . Hirsch
(86) Internationale Anmeldenummer: EP0005126
(87) Internationale Veröffentlichungsnummer: WO00075773

(56) Entgegenhaltungen:
- EP-A- 0 891 063
- DE-C- 19 739 545
- US-A- 5 896 507

## Beschreibung

Die Erfindung betrifft eine Chipkarte mit einer Ausführungseinheit zur Programmausführung und einem Speicher zum Speichern mindestens eines ersten und mindestens eines zweiten, nachladbaren Anwendungsprogramms, wobei in der Chipkarte außerdem ein Übertragungsprotokoll geladen ist.

Es sind verschiedene Ausführungsformen von Chipkarten bekannt, darunter solche, die ein Nachladen anwendungsspezifischer Programme (im folgenden: Anwendungsprogramme) ermöglichen. So besteht beispielsweise die Möglichkeit, eine zur Bargeldabhebung bei einem Kreditinstitut dienende Chipkarte mit einem Anwendungsprogramm nachzurüsten, welches eine Bargeldabhebung in einer Fremdwährung in einem anderen Land ermöglicht, wobei diese Bargeldabhebung zum Beispiel über ein Kreditkartenunternehmen abgewickelt wird.

Das Nachladen von Anwendungsprogrammen bringt gewisse Probleme mit sich. Eines dieser Probleme hat seine Ursache darin, daß das üblicherweise im Maschinencode vorliegende Anwendungsprogramm auf einer absoluten Speicheradressierung beruht. Wenn das nachgeladene Anwendungsprogramm auf feste Speicheradressen in dem Speicherbereich der Chipkarte zugreift, die außerhalb des von dem nachgeladenen Anwendungsprogramm belegten Speicherbereichs liegen, so reicht es aus, wenn bei der Programmierung des nachgeladenen Anwendungsprogramms die festen Speicheradressen bekannt sind und berücksichtigt werden.

Problematischer ist der Fall, wenn das nachgeladene Anwendungsprogramm auf solche Speicherplätze zugreift, die sich in dem von dem nachgeladenen Anwendungsprogramm belegten Speicherbereich befinden; denn bei der Erstellung des Anwendungsprogramms liegt möglicherweise noch nicht eindeutig fest, welche Speicherplätze das nachgeladene Anwendungsprogramm schließlich belegt.

Aus der DE 197 39 545 C1 ist eine Chipkarte bekannt, bei der das oben angesprochene Problem dadurch gelöst wird, daß das nachgeladene Anwendungsprogramm in zwei Gruppen von Anweisungen aufgeteilt wird, wobei die eine Gruppe nur auf Adressen außerhalb des von dem nachgeladenen Anwendungsprogramm belegten Speicherbereichs zugreift, während in der anderen Gruppe auf Adressen zugegriffen wird, die sich innerhalb des von dem nachgeladenen Anwendungsprogramms belegten Speicherbereich befinden.

Durch die oben diskutierte Maßnahme wird im Stand der Technik zwar eine Vereinfachung beim Nachladen von Anwendungsprogrammen in Chipkarten erreicht, allerdings müssen auch dort sämtliche nachgeladenen Anwendungsprogramme das in der Chipkarte installierte Übertragungsprotokoll verwenden. Bezugnehmend auf das oben angeführte Beispiel bedeutet dies: das ursprünglich in der Chipkarte gespeicherte Anwendungsprogramm für die Bargeldabhebung bei einer Bank verwendet bei den Datentransfers mit einem Terminal (einem Geldausgabeautomaten) ein Übertragungsprotokoll, und dieses wird dann später auch von dem nachgeladenen Anwendungsprogramm, beispielsweise des Typs "Bargeldabhebung über Kreditkarte", verwendet. Aus diesem Grund muß das nachgeladene Programm speziell auf das bereits in der Karte installierte Übertragungsprotokoll abgestimmt sein.

Die Anpassung der einzelnen nachzuladenden Anwendungsprogramme an das Übertragungsprotokoll für die jeweilige Chipkarte, in die das Programm nachgeladen werden soll, ist deshalb besonders umständlich, weil es unterschiedliche Chipkartentypen mit unterschiedlichen fest installierten Übertragungsprotokollen gibt, die einzelnen nachzuladenden Anwendungsprogramme also jeweils den betreffenden Chipkartentyp und das dazugehörige Übertragungsprotokoll berücksichtigen müssen.

Der Erfindung liegt die Aufgabe zugrunde, eine Möglichkeit aufzuzeigen, in Chipkarten nachladbare Anwendungsprogramme unabhängig von dem in der Zielchipkarte verwendeten Übertragungsprotokoll zu gestalten. Der Begriff Zielchipkarte bedeutet eine Chipkarte, in die ein Anwendungsprogramm nachgeladen werden soll.

Gelöst wird diese Aufgabe bei einer Chipkarte mit einer Ausführungseinheit zur Programmausführung und einem Speicher zum Speichern mindestens eines ersten und mindestens eines zweiten, nachladbaren Anwendungsprogramms dadurch, daß ein Speicherbereich für mindestens ein nachladbares Übertragungsprotokoll vorgesehen ist.

Das Nachladen des gewünschten Anwendungsprogramms erfolgt üblicherweise von einem die Chipkarte ausgebenden Unternehmen, in der Regel nicht durch den Chipkartenhersteller. Die Einspeisung des neuen Anwendungsprogramms in die Chipkarte erfolgt mit Hilfe des bereits in der Chipkarte installierten Übertragungsprotokolls. Die entsprechenden Informationen werden aus der Chipkarte in das zum Nachladen des Anwendungsprogramms verwendete Terminal gegeben. Die Datenübertragung erfolgt dann nach Maßgabe des bereits installierten Übertragungsprotokolls. Mit diesem bereits installierten Übertragungsprotokoll kann aber auch zunächst ein neues Übertragungsprotokoll nachgeladen werden, um in einem speziell dafür vorgesehenen Speicherbereich abgespeichert zu werden. Dieses Übertragungsprotokoll kann dann dem ebenfalls nachgeladenen Anwendungsprogramm zugeordnet werden, es kann aber auch weiteren, bereits früher nachgeladenen oder bereits ursprünglich gespeicherten Anwendungsprogrammen zugeordnet werden. Innerhalb der Chipkarte wird dann eine Zuordnungstabelle eingerichtet, aus der hervorgeht, welches Übertragungsprotokoll zu welchem Anwendungsprogramm gehört. Möglich ist auch die Zuordnung eines bestimmten Übertragungsprotokolls zu mehreren Anwendungsprogrammen. Eine weitere Alternative besteht darin, einem Anwendungsprogramm mehrere mögliche Übertragungsprotokolle zuzuordnen. Welches spezielle Übertragungsprotokoll dann bei einem Vorgang verwendet wird, kann von einer oder mehreren weiteren Bedingungen abhängig gemacht werden.

Bei einem erfindungsgemäßen Verfahren zum Verwenden einer Chipkarte wird nach Herstellung der Übertragungsstrecke zwischen Chipkarte und Terminal entweder ein fest vorgegebenes Anwendungsprogramm ausgeführt, oder es erfolgt mittels Tastatureingabe die Auswahl eines von mehreren Anwendungsprogrammen. Dann wird chipintern zu dem aktuellen Anwendungsprogramm das entsprechende Übertragungsprotokoll bestimmt. Mit diesem Übertragungsprotokoll erfolgt dann die Ausführung des Anwendungsprogramms, beispielsweise ein Datentransfer in Verbindung mit einer Berechtigungsprüfung oder dergleichen.

Durch die Erfindung besteht die Möglichkeit, die einzelnen nachladbaren Anwendungsprogramme unabhängig von dem jeweiligen Übertragungsprotokoll zu erstellen; denn dadurch, daß ein für das nachgeladene Anwendungsprogramm geeignetes Übertragungsprotokoll ebenfalls in die Chipkarte nachgeladen wird, kann das Anwendungsprogramm dann mit diesem nachgeladenen Übertragungsprotokoll arbeiten, es braucht also keine Rücksicht genommen werden auf Besonderheiten des bereits früher installierten Übertragungsprotokolls.

Der erfindungsgemäße Gedanke, zusätzlich zu einem nachladbaren Anwendungsprogramm ein zugehöriges Übertragungsprotokoll nachzuladen, läßt sich in der oben geschilderten Weise variieren, das heißt, es können mehrere Programme für ein einziges Übertragungsprotokoll, und es können verschiedene Übertragungsprotokolle für ein einziges Anwendungsprogramm vorgesehen werden. Das zum Nachladen eines Anwendungsprogramms und/oder eines Übertragungsprotokolls verwendete, bereits in dem Chip vorhandene Übertragungsprotokoll kann selbst wiederum ein früher nachgeladenes Übertragungsprotokoll sein. Das neu nachgeladene Übertragungsprotokoll kann einen neuen, bislang nicht genutzten Speicherbereich belegen, es kann aber auch einen Speicherbereich eines älteren, nicht mehr benutzten Übertragungsprotokolls belegen.

Bei der Erstellung von Anwendungsprogrammen und dazugehörigen Übertragungsprotokollen ist relativ wenig spezielle Kenntnis über die Beschaffenheit der Chipkarte, insbesondere deren Speicher, erforderlich. Zunächst ist - wie gesagt - das Anwendungsprogramm in seiner Ausführung unabhängig von dem bereits in der Karte installierten Übertragungsprotokoll. Dieses in der Karte installierte Übertragungsprotokoll ist lediglich für den Vorgang des Nachladens selbst zu berücksichtigen. Ein Benutzer, beispielsweise eine die Chipkarte ausgebende Organisation, kann also das Übertragungsprotokoll weitestgehend seinen speziellen Bedürfnissen gemäß gestalten.

Im folgenden werden Ausführungsbeispiele der Erfindung anhand der Zeichnung näher erläutert.

Es zeigen:
Figur 1 den schematischen Aufbau einer erfindungsgemäßen Chipkarte, angeschlossen an ein Terminal;
Figur 2 ein Flußdiagramm zum Erläutern des Nachladens eines Anwendungsprogramms und eines Übertragungsprotokolls; und
Figur 3 ein Flußdiagramm, welches den Ablauf bei der Benutzung der Chipkarte gemäß Figur 1 erläutert.

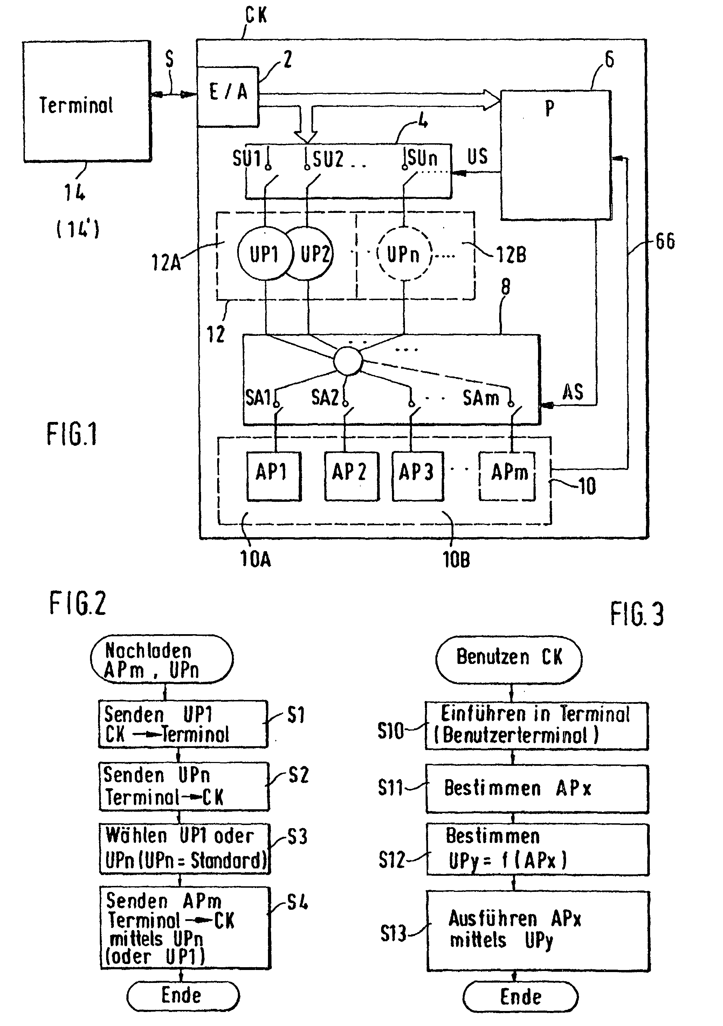

Rechts oben in Figur 1 ist eine Chipkarte CK schematisch angedeutet. Der Begriff "Chipkarte" bedeutet hier vornehmlich den in einer sogenannten Chipkarte enthaltenen Chip selbst.

Die Chipkarte CK enthält eine Ausführungseinheit (P) 6 zur Ausführung von Programmen, wobei diese Programme einerseits den Betrieb der Chipkarte steuern, andererseits den Ablauf spezieller Anwendungsprogramme steuern. Zur Steuerung des Betriebs von Chipkarte sowie des Ablaufs der speziellen Anwendungsprogramme beinhaltet die Ausführungseinheit 6 spezielle Programme, die fest für die Ausführungseinheit 6 vorgegeben sind oder nachgeladen werden können. Außerdem enthält die Chipkarte CK einen Speicher mit Speicherbereichen, von denen in Figur 1 speziell zwei Speicherbereiche 10 und 12 dargestellt sind. In dem Speicherbereich 10 sind Anwendungsprogramme AP1, AP2, AP3,... APm gespeichert oder speicherbar. Die Speicherbereiche 10 und 12 können vorab definiert sein, sie können aber auch erst dann innerhalb des Speichers festgelegt werden, wenn Programme in diesen Speicherbereichen gespeichert werden. Dabei müssen nicht unbedingt zusammenhängende Speicherbereiche belegt werden.

In Figur 1 ist der Speicherbereich 10 durch eine gestrichelte Linie aufgeteilt in einen ersten Speicherbereich 10A und einen zweiten Speicherbereich 10B. Im ersten Speicherbereich 10A seien a priori eingespeicherte Anwendungsprogramme AP1 und AP2 abgespeichert. Im Speicherbereich 10B seien nachgeladene Anwendungsprogramme AP3 ... gespeichert. Der am weitesten rechts dargestellte Bereich für das Anwendungsprogramm APm ist gestrichelt dargestellt, um anzudeuten, daß dieser Speicherbereich noch nicht von einem nachgeladenen Anwendungsprogramm belegt ist.

Der Speicherbereich 12 ist unterteilt in einen ersten Speicherbereich 12A und einen zweiten Speicherbereich 12B.

Bevor auf Besonderheiten der Erfindung näher eingegangen wird, soll hier kurz erläutert werden, wie eine Chipkarte gemäß dem Stand der Technik aufgebaut ist, welche mehrere Speicherbereiche für nachladbare Anwendungsprogramme AP1, AP2,... enthält. In einem bestimmten Speicherbereich ist ein Übertragungsprotokoll gespeichert, welches die Übertragungsmodalitäten für sämtliche Transfers zwischen der Chipkarte CK und einem Terminal 14, welches mit der Chipkarte über eine Übertragungsstrecke S gekoppelt ist, festlegt. Werden zusätzliche Anwendungsprogramme nachgeladen, beispielsweise ein zusätzliches Anwendungsprogramm AP3, so muß dieses nachladbare Anwendungsprogramm AP3 das spezielle Übertragungsprotokoll UP1, welches in der Chipkarte fest installiert ist, berücksichtigen. Bei mehreren Anwendungsprogrammen können auch mehrere Übertragungsprotokolle fest installiert sein, beispielsweise die Übertragungsprotokolle UP1 und UP2, die den ersten Speicherbereich 12A in dem Beispiel nach Figur 1 belegen. Auch in diesem Fall müssen die nachladbaren Anwendungsprogramme entweder das Übertragungsprotokoll UP1 oder das Übertragungsprotokoll UP2 oder beide Übertragungsprotokolle berücksichtigen.

Durch die Erfindung wird die Möglichkeit geschaffen, die nachladbaren Anwendungsprogramme AP3 ... APm unabhängig von den in der Chipkarte fest installierten Übertragungsprotokollen zu gestalten.

Zu diesem Zweck ist ein Speicherbereich 12B vorgesehen, in welchem sich ein oder mehrere Übertragungsprotokolle speichern lassen, die aus dem Terminal 14 in die Chipkarte CK nachgeladen werden. In Figur 1 ist ein solches nachladbares Übertragungsprotokoll mit UPn bezeichnet.

Die Datenübertragung von dem Terminal 14 über die Übertragungsstrecke 5 erfolgt in üblicher Weise über einen E/ A-Manager 2 unter Steuerung durch die Ausführungseinheit 6.

Die in Figur 1 dargestellte Chipkarte CK enthält außer den Speicherbereichen 10 und 12 für die Anwendungsprogramme bzw. für die Übertragungsprotokolle eine erste Schnittstelle 4 und eine zweite Schnittstelle 8. Diese Schnittstellen sind zur Veranschaulichung als Hardware-Schalter realisiert dargestellt, in Wirklichkeit handelt es sich jedoch um programmierte Schnittstellen, die die Verbindung des E/A-Managers 2 mit dem Speicherbereich 12 für Übertragungsprotokolle einstellt (erste Schnittstelle 4) bzw. die Verbindung zwischen dem Speicherbereich 12 für Übertragungsprotokolle mit einem der mehreren Anwendungsprogramme AP1, AP2, ... organisiert (zweite Schnittstelle 8).

Der Aufbau und die Organisation der Chipkarte CK nach Figur 1 ergeben sich deutlich durch die nachfolgende Beschreibung des Ablaufs beim Nachladen eines neuen Anwendungsprogramms APm und eines dazugehörigen Übertragungsprotokolls UPn (es gibt die beiden Möglichkeiten n = m und n ≠ m).

Zum Nachladen eines neuen Anwendungsprogramms APm und eines dazugehörigen Übertragungsprotokolls UPn wird die Chipkarte CK an das Terminal 14 angeschlossen, welches sich üblicherweise bei dem die Chipkarte CK ausgebenden Unternehmen befindet. Nach der Herstellung der Übertragungsstrecke S zwischen dem Terminal 14 und der Chipkarte CK sendet die Chipkarte Information betreffend das Übertragungsprotokoll UP1 an das Terminal 14 (Schritt S1 in Figur 2). Mit Hilfe des Übertragungsprotokolls UP 1 erfolgt der Datentransfer von dem Terminal 14 über die Übertragungsstrecke S zu der Chipkarte CK. Die Ausführungseinheit P sorgt dafür, daß das neu zu ladende Übertragungsprotokoll UPn in den dafür vorgesehenen Bereich innerhalb des zweiten Speicherbereichs 12B gelangt. Dies entspricht dem Schritt S2 in Figur 2.

Nachdem nun auch das Übertragungsprotokoll UPn in der Chipkarte CK zur Verfügung steht, besteht theoretisch die Möglichkeit, das nachzuladende Anwendungsprogramm APm entweder mit Hilfe des bereits installierten Übertragungsprotokolls UP 1 oder mit Hilfe des neuen, nachgeladenen Übertragungsprotokolls UPn von dem Terminal 14 in die Chipkarte CK zu laden.

Gemäß Schritt S3 in Figur 2 wird als Standardmaßnahme das jeweils neu geladene Übertragungsprotokoll, hier UPn, für das Nachladen des Anwendungsprogramms APm gewählt (Schritt S4 in Figur 2).

Anstelle des Standard-Übertragungsprotokolls UPn kann auch das bereits fest installierte Übertragungsprotokoll UP 1 für das Nachladen des Anwendungsprogramms APm verwendet werden, beispielsweise kann dies bei Erfüllung einer bestimmten Bedingung geschehen, zum Beispiel abhängig von einer entsprechenden Tastaturbetätigung an dem Terminal 14.

Nachdem das Übertragungsprotokoll UPn und das Anwendungsprogramm APm in die Chipkarte CK geladen sind, kann die Chipkarte CK auch entsprechend dem Anwendungsprogramm APm verwendet werden, jeweils mit Hilfe des neuen Übertragungsprotokolls UPn. Es kann auch vorgesehen sein, daß die Anwendungsprogramme AP1... APm über eine Schnittstelle 66 die Zuordnung der Übertragungsprotokolle UP1... UPn selbst durchführen bzw. deren Zuordnung durch die Ausführungseinheit 6 beeinflussen.

### BEISPIEL:

Das Anwendungsprogramm AP1 entspreche der Anwendung "Geldkarte" mit Gültigkeit in Europa. Zur Bargeldabhebung wird die Chipkarte CK in einen Bargeldautomaten eingegeben, in Figur 1 angedeutet durch ein Terminal 14' (das Terminal 14' entspricht einem Bargeldautomaten, das Terminal 14, welches oben bereits angesprochen wurde, dient zum Nachladen von Anwendungsprogrammen).

Zwischen dem Terminal 14' und der Chipkarte CK erfolgt ein Datenaustausch über die Übertragungsstrecke S, beispielsweise um eine Berechtigungsprüfung durchzuführen. Der Datenaustausch erfolgt nach Maßgabe des Übertragungsprotokolls UP1.

Wenn nun der Benutzer der Chipkarte CK den Wunsch hat, die Nutzbarkeit der Chipkarte CK zu erweitern, um beispielsweise auch in den USA Bargeld unter Inanspruchnahme der Dienste einer Kreditkartengesellschaft abheben zu können, so wird die Chipkarte (typischerweise bei dieser Kreditkartengesellschaft) an ein Nachlade-Terminal 14 angeschlossen. Mit den oben in Verbindung mit Figur 2 beschriebenen Verfahren erfolgt ein Nachladen des Übertragungsprotokolls UPn und des Anwendungsprogramms APm. Nun kann die Chipkarte CK auch in den USA zum Abheben von Bargeld verwendet werden. Zu diesem Zweck wird die Chipkarte CK in ein entsprechendes Terminal 14' eingeführt, beispielsweise über Tastatureingabe wird die Anwendung entsprechend dem Anwendungsprogramm APm aufgerufen, und aufgrund dieses Aufrufs wird von der Ausführungseinheit 6 das Übertragungsprotokoll UPn in dem Speicherbereich 12B aktiviert. Dann erfolgt in der oben bereits beschriebenen Weise der Datentransfer über die Übertragungsstrecke S nach Maßgabe des Übertragungsprotokolls UPn.

Da die Benutzung der Chipkarte CK mit der Anwendung entsprechend dem Anwendungsprogramm APm unabhängig von dem Übertragungsprotokoll UP1 ist, mit dessen Hilfe das Übertragungsprotokoll UPn und das Anwendungsprogramm APm in die Chipkarte geladen wurde, kann das Anwendungsprogramm APm selbst unabhängig von dem bereits in der Chipkarte CK befindlichen Übertragungsprotokoll UP1 erstellt werden.

Die in Figur 1 dargestellten Schnittstellen 4 und 8 werden in der Chipkarte CK durch entsprechende Programmierung realisiert, deren Ablauf durch die Ausführungseinheit (P) 6 gesteuert wird. Entsprechend dem Aufruf eines der Anwendungsprogramme AP1, AP2, ... APm steuert die Ausführungseinheit (P) 6 die Auswahl eines zugehörigen Übertragungsprotokolls. Dieses Übertragungsprotokoll ist dann für den nachfolgenden Datentransfer maßgeblich, entsprechende Information wird dem Terminal 14' zugeleitet.

In Figur 1 ist die Schnittstelle 4 mit mehreren geöffneten Schaltern SU1 bis SUn dargestellt. Der geschlossene Schalter SU2 deutet an, daß die Information über das Übertragungsprotokoll UP2 an das Terminal 14 geliefert wird.

Die Schnittstelle 8 ist als "Sternverteiler" dargestellt, das heißt sämtliche Übertragungsprotokolle UP1, UP2, ... UPn können einzeln jeweils über einen Schalter SA1, SA2,... SAm einem der Anwendungsprogramme AP1, AP2,... APm zugeordnet werden. Außerdem besteht die Möglichkeit, eines der mehreren Übertragungsprotokolle mehreren Anwendungsprogrammen zuzuordnen. In dem in Figur 1 dargestellten Beispiel erfolgt gerade eine Zuordnung zu dem einen Anwendungsprogramm AP1. Bei dem tatsächlich ausgeführten Datentransfer sind jeweils nur ein Anwendungsprogramm AP1 oder AP2... und nur ein einziges Übertragungsprotokoll UP1 oder UP2... aktiv. Die Zuordnung erfolgt beispielsweise anhand eines (nicht dargestellten) Tabellenspeichers, in welchem gespeichert ist, wie die Zuordnung zwischen den Übertragungsprotokollen einerseits und den Anwendungsprogrammen andererseits gestaltet ist. Wie bereits oben beschrieben, kann die Zuordnung zwischen Übertragungsprotokollen und Anwendungsprogrammen auch über die Schnittstelle 66 von den Anwendungsprogrammen selbst vorgenommen bzw. veranlaßt werden. In diesem Fall wird der Tabellenspeicher entsprechend über die Schnittstelle 66 beeinflußt.

Figur 3 zeigt schematisch den Ablauf bei der Benutzung der Chipkarte CK. In einem Schritt S10 wird die Chipkarte in ein Benutzerterminal, beispielsweise einen Bargeldautomaten, eingeführt.

Es erfolgt dann in an sich bekannter Weise die Bestimmung einer speziellen Anwendung aus der Menge der Anwendungsprogramme AP1, AP2,... APm, im vorliegenden Fall mit APx bezeichnet (Schritt S11).

Als Funktion der bestimmten Anwendung APx erfolgt dann die Bestimmung des zugrundezulegenden Übertragungsprotokolls UPy (Schritt S12). Dann schließt sich die Ausführung der Anwendung APx unter Zugrundelegung des Übertragungsprotokolls UPy an.

Es sind zahlreiche Abwandlungen der oben beschriebenen Ausführungsform möglich. Beim Nachladen eines Anwendungsprogramms und eines dazugehörigen Übertragungsprotokolls kann dieses neue Übertragungsprotokoll auch für andere Anwendungen als neues Übertragungsprotokoll festgelegt werden. Außerdem besteht die Möglichkeit, ein Übertragungsprotokoll nachzuladen, ohne gleichzeitig ein dazugehöriges Anwendungsprogramm nachzuladen. Das so nachgeladene neue Übertragungsprotokoll kann dann sämtliche oder einige oder auch nur ein einziges der bereits vorhandenen Übertragungsprotokolle ersetzen. Es ist auch der Spezialfall möglich, daß ein Anwendungsprogramm nachgeladen wird, wobei dieses nachgeladene Anwendungsprogramm mit einem Übertragungsprotokoll zusammenarbeitet, welches bereits vorher für ein anderes nachgeladenes Anwendungsprogramm nachgeladen wurde.

## Patentansprüche

1. Chipkarte (CK) mit einer Ausführungseinheit (6) zur Programmausführung, und einem Speicher (10,12) zum Speichern von mindestens einem oder mehreren nachladbaren Anwendungsprogrammen (AP1, AP2, AP3,... APm), und mindestens einem Übertragungsprotokoll (UP1...), **dadurch gekennzeichnet, daß** ein Speicherbereich (12B) für mindestens ein nachladbares Übertragungsprotokoll (UPn) vorgesehen ist.

2. Chipkarte nach Anspruch 1, **dadurch gekennzeichnet, daß** das nachgeladene Übertragungsprotokoll einem oder mehreren Anwendungsprogrammen zugeordnet ist.

3. Verfahren zum Nachladen eines Übertragungsprotokolls in einen Speicherbereich einer Chipkarte (CK), insbesondere einer Chipkarte gemäß Anspruch 1 oder 2, bei dem das Nachladen mittels eines bereits in der Chipkarte gespeicherten Übertragungsprotokolls erfolgt.

4. Verfahren nach Anspruch 3, bei dem im Anschluß an das oder vor dem Nachladen des Übertragungsprotokolls ein neues Anwendungsprogramm nachgeladen wird.

5. Verfahren nach Anspruch 3 oder 4, wobei das nachgeladene Übertragungsprotokoll einem oder mehreren bereits in der Chipkarte (CK) gespeicherten Anwendungsprogramm (AP1, AP2, AP3,...) und/oder einem neu nachgeladenen Anwendungsprogramm zugeordnet wird.

6. Verfahren zur Verwendung einer Chipkarte mit einer Ausführungseinheit (6) und einem Speicher (10, 12), in welchem mindestens ein Anwendungsprogramm (AP1, AP2,...) und mindestens zwei Übertragungsprotokolle (UP1, UP2,...) gespeichert sind, in Verbindung mit einem Terminal (14'), umfassend folgende Schritte:
a) Herstellen einer Übertragungsstrecke (5) zwischen Chipkarte (CK) und Terminal (14');
b) bei mehreren möglichen Anwendungsprogrammen: Bestimmen des aktuellen Anwendungsprogramms (AP1 oder AP2 oder AP3...);
c) Bestimmen des zu dem aktuellen Anwendungsprogramm gehörigen aktuellen Übertragungsprotokolls (UP1 oder UP2...); und
d) Ausführen des aktuellen Anwendungsprogramms mittels des aktuellen Übertragungsprotokolls.

## Claims

1. A chip card (*CK*) with an execution unit (6) for program execution, and a memory (10, 12) for storing at least one or more downloadable application programs (*AP*1, *AP*2, *AP*3, ... *APm*), and at least one transmission protocol (*UP*1...), **characterized in that** a memory area (12*B*) is provided for at least one downloadable transmission protocol (*UPn*).

2. A chip card according to claim 1, **characterized in that** the downloaded transmission protocol is associated with one or more application programs.

3. A method for downloading a transmission protocol into a memory area of a chip card (*CK*), in particular a chip card according to claim 1 or 2, wherein downloading is effected by means of a transmission protocol already stored in the chip card.

4. A method according to claim 3, wherein a new application program is downloaded subsequent to or before the downloading of the transmission protocol.

5. A method according to claim 3 or 4, wherein the downloaded transmission protocol is associated with one or more application programs (*AP*1 *AP*2, *AP*3, ...) already stored in the chip card (*CK*) and/or with a newly downloaded application program.

6. A method for using a chip card with an execution unit (6) and a memory (10, 12) storing at least one application program (*AP*1, *AP*2, ...) and at least two transmission protocols (*UP*1, *UP*2, ...), in connection with a terminal (14'), comprising the following steps:
a) producing a communication link (5) between chip card (*CK*) and terminal (14');
b) in case of a plurality of possible application programs: determining the current application program (*AP*1 or *AP*2 or *AP*3 ...);
c) determining the current transmission protocol (*UP*1 or *UP*2 ...) belonging to the current application program; and
d) executing the current application program by means of the current transmission protocol.

## Revendications

1. Carte à puce (CP) comportant une unité d'exécution (6) pour exécuter des programmes et une mémoire (10, 12) pour stocker au moins une ou plusieurs applications susceptibles d'être chargées ultérieurement (AP1, AP2, AP3, ... APm), et au moins un protocole de transmission (PT1...), **caractérisée en ce qu'**une zone de mémoire (12B) est prévue pour au moins un protocole de transmission susceptible d'être chargée ultérieurement (PTn).

2. Carte à puce selon la revendication 1, **caractérisée en ce que** le protocole de transmission susceptible d'être chargée ultérieurement est associée à une ou plusieurs applications.

3. Procédé pour charger ultérieurement un protocole de transmission dans une zone mémoire d'une carte à puce (CP), en particulier d'une carte à puce selon la revendication 1 ou 2, dans lequel le chargement ultérieur a lieu au moyen d'un protocole de transmission déjà stocké dans la carte à puce.

4. Procédé selon la revendication 3, dans lequel une nouvelle application est chargée après ou avant le chargement ultérieur du protocole de transmission.

5. Procédé selon la revendication 3 ou 4, dans lequel le protocole de transmission chargé ultérieurement est associé à une ou plusieurs applications (AP1, AP2, AP3, ...) déjà stockées dans la carte à puce (CP) et/ou à une application nouvellement chargée.

6. Procédé pour utiliser une carte à puce comportant une unité d'exécution (6) et une mémoire (10, 12) dans laquelle sont stockés au moins une application (AP1, AP2, ...) et au moins deux protocoles de transmission (UP1, UP2, ...), en liaison avec un terminal (14'), comportant les étapes suivantes :
a) création d'un chemin de transmission (5) entre carte à puce (CP) et terminal (14') ;
b) dans le cas de plusieurs programmes d'application possibles : détermination du programme d'application courant (AP1 ou AP2 ou AP3...) ;
c) détermination du protocole de transmission courant appartenant au programme d'application courant (PT1 ou PT2...) ; et
d) exécution de l'application courant au moyen du protocole de transmission courant.
